# EUROPÄISCHE PATENTSCHRIFT

(11) **EP 1 251 265 B1**
(45) Veröffentlichungstag und Bekanntmachung des Hinweises auf die Patenterteilung: **02.06.2004**
(21) Anmeldenummer: 02007333.4
(22) Anmeldetag: 04.04.2002
(51) Int. Cl.: F02M 31/125, F02M 31/135, F02M 31/18

(54) **Ansaugvorrichtung für eine Brennkraftmaschine mit Verdampfungselement für den eingespritzten Kraftstoff**
Intake device for an internal combustion engine having an element for evaporating injected fuel
Dispositif d'aspiration pour un moteur à combustion interne ayant un élement d'évaporation de carburant injecté

(30) Priorität: 21.04.2001 DE 10119620
(43) Veröffentlichungstag der Anmeldung: 23.10.2002
(73) Patentinhaber: Mann + Hummel GmbH, 71638 Ludwigsburg (DE)
(72) Erfinder: Franz, Andreas, 70806 Kornwestheim (DE)
(74) Vertreter: Voth, Gerhard, Dipl.-Ing.

(56) Entgegenhaltungen:
- EP-A- 0 453 927
- EP-A- 0 469 261
- DE-A- 4 218 558
- US-A- 4 378 001

## Beschreibung

### Stand der Technik

Die Erfindung betrifft eine Ansaugvorrichtung für eine Brennkraftmaschine, bei der in die zu den Zylindern führenden Saugkanälen eine Verdampfungseinrichtung für den eingespritzten Kraftstoff vorgesehen ist, nach der Gattung des Patentanspruches 1. Weiterhin betrifft die Erfindung eine Brennkraftmaschine, in die eine solche Ansaugvorrichtung integriert ist, nach der Gattung des Patentanspruches 5.

Ansaugvorrichtungen mit Verdampfungseinrichtungen sind bekannt. In der DE 40 20 266 C1 ist beispielsweise eine Trennwand vorgeschlagen, welche als Teil von Einlaßventilkanälen ausgebildet ist und welche mit Hilfe eines Heizstabes elektrisch beheizt werden kann. Eine andere Variante einer Heizvorrichtung ist gemäß DE 40 20 267 C1 offenbart. Hierbei kommt ein stabförmiges Heizelement zum Einsatz, welches aus einem hoch wärmeleitfähigen Material gefertigt ist, und ausgehend vom Brennraum eines Zylinders in den Ansaugkanal hineinreicht, wodurch die Wärme aus dem Brennraum in den Ansaugkanal transportiert wird. Diese Wärme wird ebenfalls zur Verdampfung des eingespritzten Kraftstoffes verwendet.

Die beschriebenen Lösungen für eine Verdampfung des Kraftstoffes können jedoch noch nicht als voll befriedigend bezeichnet werden. Wird für die Verdampfungsvorrichtung ein elektrisch beheizter Heizstab verwendet, so entsteht hierdurch ein zusätzlicher Energiebedarf der Brennkraftmaschine, welcher indirekt durch deren Leistungsabgabe gedeckt werden muss. Damit verringert sich die Wirtschaftlichkeit der Brennkraftmaschine. Außerdem müssen die zusätzlichen Komponenten in die Brennkraftmaschine eingebaut werden, wodurch ein zusätzlicher Montageaufwand entsteht und die Wirtschaftlichkeit der Lösung verringert wird.

Ersetzt man jedoch die elektrische Heizvorrichtung durch einen hoch wärmeleitfähigen Heizstab, so ist die Wärmeübertragung durch diesen Heizstab begrenzt. Außerdem steht die Verdampfungswärme nach einem Kaltstart der Brennkraftmaschine erst nach einer gewissen Aufwärmungsphase der selben zur Verfügung. Dies beeinflußt die Emissionswerte der Brennkraftmaschine während des Kaltstarts negativ, weswegen aufwendige Maßnahmen zur Abgasreinigung während des Kaltstarts getroffen werden müssen.

Aufgabe der Erfindung ist es daher, eine wirkungsvolle und kostengünstige Verdampfungseinrichtung für den in einen Saugkanal der Brennkraftmaschine eingespritzten Kraftstoff zu schaffen. Diese Aufgabe wird durch die Merkmale des Patentanspruches 1 sowie der weiteren unabhängigen Ansprüche gelöst.

### Vorteile der Erfindung

Die erfindungsgemäße Ansaugvorrichtung weist für jeden Zylinder jeweils zumindest einen Saugkanal auf. Denkbar ist auch das Vorsehen von mehreren Saugkanälen, wobei nicht in jedem dieser Saugkanäle eine Kraftstoffeinspritzung erfolgen muss. Bei einer einzylindrischen Brennkraftmaschine ist prinzipiell nur ein Saugkanal notwendig.

Weiterhin ist in die besagten Saugkanäle jeweils ein Einspritzventil derart eingebaut, dass eine Einspritzung des Kraftstoffes direkt in den Saugkanal notwendig ist. Dieser ist dabei auf ein Verdampfungselement gerichtet, so dass die im Verdampfungselement gespeicherte Wärme zur Verdampfung des Kraftstoffes beitragen kann.

Die Ansaugvorrichtung im Sinne des Patentanspruches 1 muss zumindest die genannten Saugkanäle enthalten. Als Ansaugvorrichtung kann also auch der Teil des Ansaugtraktes verstanden werden, der in den Zylinderkopf der Brennkraftmaschine integriert ist, sofern eine Einspritzung des Kraftstoffes sowie dessen Verdampfung in diesen Teil der Brennkraftmaschine erfolgt.

Als Ansaugvorrichtung kann jedoch auch das Saugrohr verstanden werden, welches bei den meisten Brennkraftmaschine als gesondertes Bauteil ausgeführt ist. Dieses weist die Saugkanäle auf, die von einem gemeinsamen Sammelraum abgehen, wobei der Sammelraum über einen Einlaß mit dem Ansaugtrakt der Brennkraftmaschine verbunden wird und die Saugkanäle in einen Zylinderkopfflansch münden, der an den Zylinderkopf der Brennkraftmaschine befestigt werden kann. In diese Ansaugvorrichtung können sowohl die Verdampfungselemente als auch die Einspritzventile montiert werden, wodurch die Endmontage der Brennkraftmaschine wesentlich erleichtert wird.

Die Erfindung ist dadurch gekennzeichnet, dass das Verdampfungselement aus einem Halbleiterbaustein besteht, welcher als Schalter ausgeführt ist. Gemeint sind hiermit die sogenannten Endstufen, die zur schnellgetakteten Schaltung von elektrischen Bauteilen der Brennkraftmaschine verwendet werden. Zu diesem Zweck weisen diese Eingänge für eine Spannungsversorgung auf, welche zum Beispiel durch die Bordbatterie gebildet werden kann. Weiterhin sind Ausgänge vorgesehen, an die der zu schaltende elektrische Stromabnehmer angeschlossen ist. Zuletzt gibt es einen Anschluß für Steuerimpulse, die zur Schaltung der Endstufe verwendet werden. Diese Steuerimpulse können zum Beispiel zentral aus einer Motorsteuerung kommen. Es kann auch eine gesonderte Steuerung vorgesehen werden.

Die Halbleiterbausteine sind in die Wandung des jeweiligen Saugkanals eingebettet. Die Einbettung kann auf unterschiedliche Weise erfolgen. Es ist möglich, die Halbleiterbausteine mit Hilfe einer Schnappverbindung oder ähnlichem in dafür vorgesehene Aussparungen in die Wandung des Saugkanal einzusetzen. Eine andere Möglichkeit besteht in der Unterbringung in der Aussparung durch Eingießen mit einem genügend temperaturbeständigen Hilfsstoff, z. B. Kunstharz.

Gemäß einer besonderen Ausgestaltung der Erfindung können die Halbleiterbausteine jedoch auch direkt in die Wandung eingegossen werden, während der Saugkanal urformtechnisch hergestellt wird. Dies ist insbesondere bei Saugkanälen aus Kunststoff möglich, da diese durch das Spritzgußverfahren hergestellt werden können. Die Halbleiterbausteine können dabei in die zugehörige Form für die Saugkanäle eingelegt werden und werden durch das Wandungsmaterial umspritzt. Eine Fixierung der Halbleiterbausteine kann über die erwähnten Ausgänge, Eingänge und Anschlüsse erfolgen oder über gesondert hierfür vorgesehene Haltevorrichtungen. Hierdurch ist daher ein besonders kostengünstiges Verfahren realisierbar. Dabei kann der Einguß im Übrigen auch derart erfolgen, dass Teile des Halbleiterbausteines aus der Innenwandung des Saugkanal herausragen. In diesen Fällen ist eine besonders effektive Wärmeübertragung vom Halbleiterbaustein in den unverdampften Kraftstoff möglich.

Der Vorteil der erfindungsgemäßen Ausgestaltung der Verdampfungselemente liegt darin, dass die zur Verdampfung des Kraftstoffs benutzte Wärme Bauart bedingt entsteht und daher nicht gesondert erzeugt werden muss. Diese Wärme steht nach dem Start der Brennkraftmaschine schnell zur Verfügung, insbesondere wenn die Halbleiterbausteine gemäß besonderer Ausgestaltungen der Erfindungen als Zündendstufen für die Zündkerzen der Brennkraftmaschine bzw. als Einspritzendstufen zur Schaltung der Einspritzventile verwendet werden. Gleichzeitig wird durch die gewünschte Verdampfung des Kraftstoffs eine ebenfalls gewünschte Kühlung der Endstufen erreicht. Der beschriebene Synergieeffekt führt zu einer geringeren Belastung der Halbleiterbausteine, weswegen deren Dimensionierung geringer gewählt werden kann. Hierdurch entsteht ein Kostenvorteil. Eine externe Kühlung ist nicht erforderlich, wie sie zum Beispiel bei Unterbringung der Halbleiterbausteine in einem gesonderten Steuerungsgehäuse notwendig werden kann. Hierdurch läßt sich ein zusätzlicher Einsparungseffekt erzielen.

Eine schnelle Erwärmung der Halbleiterelemente beim Kaltstart kann beispielsweise durch die sogenannte Folgenfunktenzündung erreicht werden. Diese wird zwecks einer besseren Verbrennung der Kraftstoffes beim Kaltstart gewählt und führt dann gleichzeitig sehr schnell zu einer optimalen Verdampfung desselben, da bei der Folgenfunktenzündung die Halbleiterbausteine stark belastet werden und in Folge dessen einen großen Betrag an Wärme produzieren.

Insgesamt ist ein wesentlicher Vorteil des beschriebenen Systems auch darin zu sehen, dass es selbst regelnd ist. In den Fällen, wo die eingespritzte Kraftstoffmenge steigt und daher eine größere Wärmemenge zu dessen Verdampfung notwendig ist, muss gleichzeitig die Leistung der Halbleiterbausteine steigen, sofern sie zur Betätigung des Einspritzventils bzw. zur Zündung genutzt werden. Dadurch ist eine optimale Kraftstoffverdampfung ohne externe Regelung möglich, wodurch komplizierte Regelsysteme entfallen können. Auch unter diesem Aspekt wird die extreme Wirtschaftlichkeit der vorgeschlagenen Lösung deutlich.

Ein weiterer Vorteil besteht in der Bauteilintegration. Bei modernen Brennkraftmaschinen wird insbesondere im Bereich des Zylinderkopfes derselben der Einbauraum knapp. Die Einbettung der Halbleiterbausteine in den Saugkanal macht zusätzliche Trägerbauteile unnötig. Gleichzeitig werden die Wege zu den angesteuerten Bauteilen (Einspritzventile und Zündkerzen) sehr kurz, wodurch die Ansprechzeiten dieser Bauteile optimiert werden können. Auch dies sorgt für eine optimale Funktion der Brennkraftmaschine insbesondere hinsichtlich ihres Wirkungsgrades und ihrer Emissionswerte. Die zur Ansteuerung notwendigen weiteren Steuerungsbausteine können ohne große Probleme in die Motorsteuerung integriert werden, da die wärmeproduzierenden Leistungsbausteine ausgelagert sind. Durch dies Integration lässt sich ein weiterer Einsparungseffekt erzielen.

Gemäß einer vorteilhaften Ausgestaltung der Erfindung sind die Saugkanäle derart gestaltet, dass die Einspritzventile eine Einspritzung des Kraftstoffs in Richtung der Ansaugluft gewährleisten. Hierbei ist bevorzugt ein Winkel von 15-20° zu Richtung der Ansaugluft einzuhalten. Der Kraftstoff trifft demgemäß hinter der Einspritzstelle auf die gegenüberliegende Wandung des Saugkanals, in die die Halbleiterbausteine eingebaut sind. Hierdurch werden gleichzeitig die in den Saugkanälen vorherrschenden Strömungsverhältnisse beachtet, wodurch die Funktion der Brennkraftmaschine weiter optimiert werden kann.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: ein schematisch dargestelltes System, enthaltend eine Brennkraftmaschine mit einem Saugrohr, einer Motorsteuerung und der Batterieversorgung,
- Figur 2: ein schematischen Längsschnitt durch ein Saugrohr mit Aufsicht auf die in den Saugkanälen untergebrachten Halbleiterbausteine,
- Figur 3: den Querschnitt durch ein Saugrohr und
- Figur 4: eine Teilansicht des Zylinderkopfes einer Brennkraftmaschine im Schnitt.

### Beschreibung der Ausführungsbeispiele

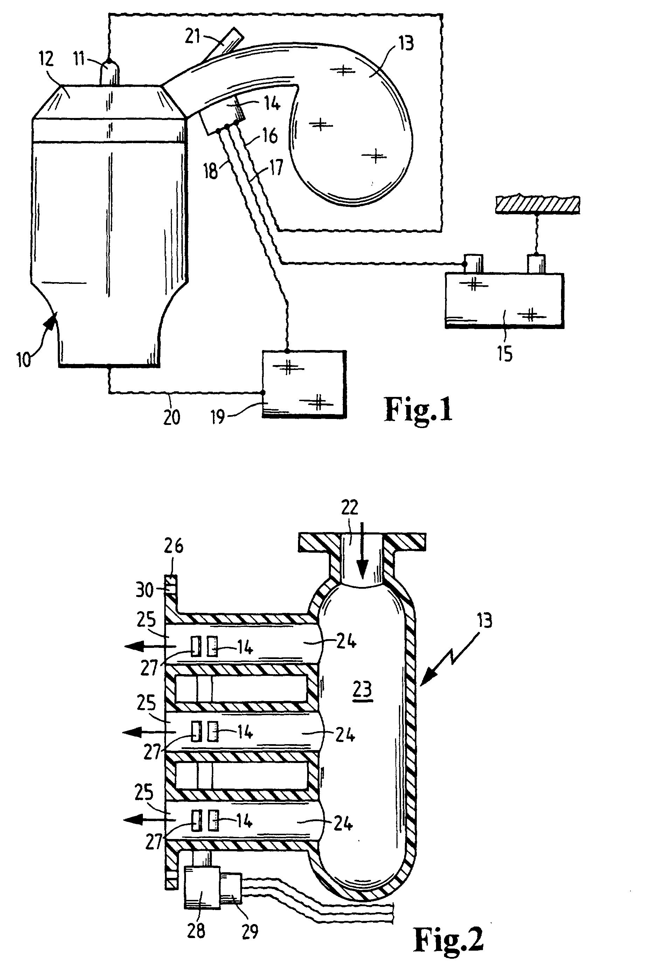

In Figur 1 schematisch dargestellt ist eine Brennkraftmaschine 10 wobei exemplarisch eine Zündkerze 11 vorgesehen ist. Zu einem Zylinderkopf 12 der Brennkraftmaschine führt ein Saugrohr 13, welches die Zylinder der Brennkraftmaschine mit der Ansaugluft versorgt. Der weitere Ansaugtrakt (Luftfilter, Ansaugstutzen usw.) sind der Einfachheit halber nicht dargestellt.

Weiterhin ist schematisch am Saugrohr eine Zündendstufe 14 dargestellt welche zur Schaltung der Zündkerze 11 verwendet wird. Um die Zündkerze 11 mit Spannung zu versorgen, ist die Zündendstufe 14 weiterhin an eine Spannungsversorgung 15 angeschlossen, welche schematisch als Fahrzeugbatterie dargestellt ist. Für die Zündkerze weist die Zündendstufe einen Ausgang 16 auf und für die Spannungsversorgung 15 einen Eingang 17. Zuletzt ist ein Anschluß 18 vorgesehen, über den Schaltimpulse einer Motorsteuerung 19 zur Schaltung der Zündendstufe übertragen werden können. Die Motorsteuerung weist weiterhin mindestens eine Verbindung 20 zur Brennkraftmaschine auf, welche für weitere Steuerungsaufgaben zur Verfügung steht. Weiterhin ist am Saugrohr ein Einspritzventil 21 angedeutet.

Ein Saugrohr, wie es beispielsweise in einer Anordnung gemäß Figur 1 verwendet werden könnte, ist in Figur 2 dargestellt. Das Saugrohr weist in bekannter Weise einen Einlaß 22, einen Sammelraum 23, Saugkanäle 24 und Austritte 25 in einem Zylinderkopfflansch 26 auf. Gleiche Bauteile in den diskutierten Figuren 1-4 sind mit gleichen Bezugszeichen versehen und insoweit nicht noch einmal gesondert erwähnt.

In dem Saugrohr 13 gemäß Figur 2 lässt sich die Gestaltung der Halbleiterbausteine zur Aufheizung des Kraftstoffs genauer entnehmen. Die Halbleiterbausteine bestehen hier pro Saugkanal 24 aus je einer Zündendstufe 14 und einer Einspritzendstufe 27, welche die Einspritzventile schaltet. Die Halbleiterbausteine der Endstufen 14, 27 sind derart in das aus Kunststoff bestehende Saugrohr 13 eingegossen, dass deren Oberseiten die Innenwände der Saugkanäle durchtritt. Hierdurch ist eine besonders schnelle Wärmeübertragung von den Endstufen auf den eingespritzten Kraftstoff möglich.

Die Endstufen 14, 27 werden über ein gemeinsames Steuerungsgehäuse 28 versorgt, welches außen am Saugrohr angebracht werden kann. In diesem Fall ist für die Ansteuerung der Endstufen also eine eigene Steuerung vorgesehen. Diese weist einen Steckanschluß 29 auf, an den die nicht dargestellte Spannungsversorgung 15 bzw. verschiedene Datenleitungen zur Kommunikation mit der Steuerung angeschlossen werden können.

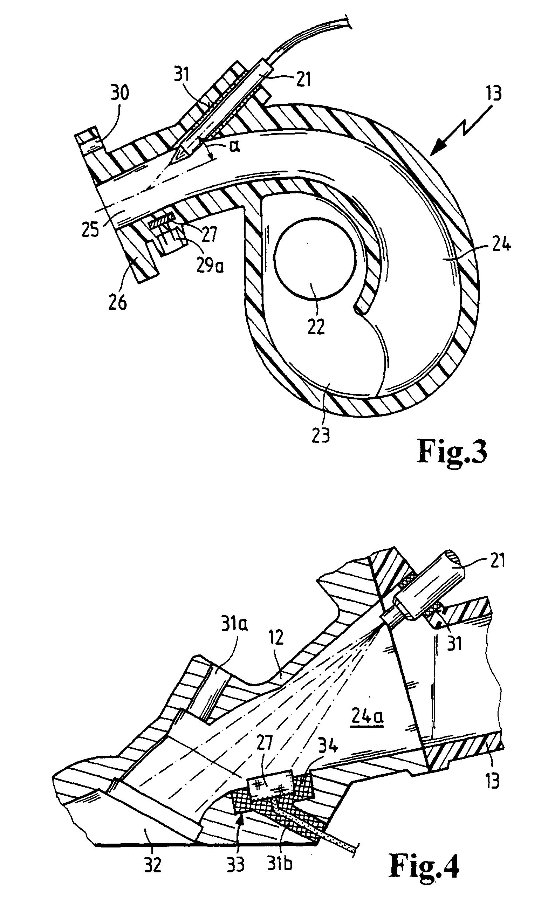

In Figur 3 ist ein Saugrohr 13 im Querschnitt gezeigt. Zu erkennen ist ein Durchgang 30 im Zylinderkopfflansch 26 zu der Befestigung des Saugrohrs am Zylinderkopf. Weiterhin ist das Einspritzventil 21 näher dargestellt. Dieses wird durch eine Durchführung 31 im Saugrohr in den jeweiligen Saugkanal 24 eingesteckt. Die Spritzrichtung des Saugrohres steht in einem Winkel α zur Mittelachse des Saugkanals 24. Dieser Winkel α beträgt bevorzugt 15-20°. Das zur Anwendung kommende Einspritzventil 21 kann als elektromagnetisches oder piezomagnetisches Ventil ausgestaltet sein, wodurch sehr schnelle Schaltzeiten erreicht werden.

In direkter Verlängerung der Spritzrichtung des Einspritzventils 21, eingegossen in die Wandung des Saugkanals gegenüber dem Einspritzventil ist die zum Einspritzventil zugehörige Einspritzendstufe 27. Eingang 17, Ausgang 16 und Anschluß 18 gemäß Figur 1 sind gemäß Figur 3 nicht näher dargestellt. Jedoch ist an das Saugrohrgehäuse ein Steckanschluß 29a angegossen, welcher die erwähnten Anschlüsse beinhaltet. Dadurch ist eine einfache Endmontage des Saugrohres im Motorraum der Brennkraftmaschine möglich. Der Steckanschluß 29a kann auch verwendet werden, um ein dem Steuerungsgehäuse 28 gemäß Figur 2 gestaltetes Gehäuse an das Saugrohr anzuschließen. Dieses würde dann mit den benachbarten, ebenfalls mit Steckanschlüssen 29a versehenen Saugkanäle kommunizieren, die in Figur 3 außerhalb der Zeichenebene liegen und daher nicht dargestellt sind.

Eine andere Gestaltung des Ansaugtraktes ist Figur 4 zu entnehmen. Hier ist in erster Linie der Teil des Saugkanals 24a dargestellt, welcher durch den Zylinderkopf 12 gebildet wird. Zu erkennen ist weiterhin eine Durchführung 31a für das Einlaßventil in einen Brennraum 32 des Zylinders. Das Einspritzventil 21 ist noch im Teil des Saugrohrs 13 eingebaut. Hierzu wird die abgedichtete Durchführung 31 verwendet.

Die Einspritzendstufe 27 ist in diesem Ausführungsbeispiel derart in eine Aussparung 33 eingegossen, dass ein Teil des Halbleiterbausteins in den Saugkanal 24a reicht. Auf diesen ist der Sprühstoß an Kraftstoff des Einspritzventils 21 gerichtet. Die Aussparung befindet sich in der Wandung des Saugkanals 24a, der aus einem metallischen Werkstoff hergestellt ist. Die Einspritzendstufe ist mit Hilfe eines Zusatzwerkstoffes 34 in diese Aussparung eingegossen. Dieser Zusatzwerkstoff dichtet gleichzeitig eine Durchführung 31b ab, durch die die elektrischen Anschlüsse für den Halbleiterbaustein (entsprechend Ausgang 16, Eingang 17, Anschluß 18 gemäß Figur 1) nach außen geführt sind.

## Patentansprüche

1. Ansaugvorrichtung für eine Brennkraftmaschine, aufweisend jeweils einen Saugkanal (24, 24a) für jeden Zylinder der Brennkraftmaschine zur Zuführung von Verbrennungsluft, wobei in die besagten Saugkanäle jeweils ein Einspritzventil (21) für den zu verbrennenden Kraftstoff derart eingebaut ist, dass eine Einspritzung des Kraftstoffes in den Saugkanal möglich ist, welcher dabei auf ein Verdampfungselement gerichtet ist, **dadurch gekennzeichnet, dass** das Verdampfungselement aus einem Halbleiterbaustein (14, 27) besteht, welcher als Schalter ausgeführt ist und einen Eingang (17) für eine Spannungsversorgung und einen Ausgang (16) für einen elektrischen Stromabnehmer sowie einen Anschluss für Steuerimpulse zu dessen Schaltung aufweist, wobei der Halbleiterbaustein in die Wandungen des jeweiligen Saugkanals eingebettet ist.

2. Ansaugvorrichtung nach Anspruch 1, **dadurch gekennzeichnet, dass** das jeweilige Einspritzventil derart in die Wandung des Ansaugkanals eingebaut ist, dass die Sprührichung in Richtung der Ansaugluft geneigt ist und insbesondere einen Winkel von 15 - 20° zu dieser aufweist und dass der jeweilige Halbleiterbaustein (14, 27) im dem Einspritzventil gegenüberliegenden Bereich der Wandung eingebettet ist, wo der eingespritzte Kraftstoff auf diesen Bereich auftrifft.

3. Ansaugvorrichtung nach einem der vorherigen Ansprüche, **dadurch gekennzeichnet, dass** der jeweilige Halbleiterbaustein (14, 27) aus den inneren Wandungen des Saugkanals (24, 24a) herausragt.

4. Ansaugvorrichtung nach einem vorherigen Ansprüche, **dadurch gekennzeichnet, dass** die Ansaugvorrichtung ein Saugrohr (13) ist, welches die Saugkanäle (24, 24a) in einer Struktur vereinigt, einen Zylinderkopfflansch (26) aufweist, in dem durch die Saugkanäle gebildete Austritte (25) zum Anschluss an den Zylinderkopf einer Brennkraftmaschine gebildet sind und einen Sammelraum (23) mit einem Einlass (22) für die Verbrennungsluft aufweist, von dem die Saugkanäle abgehen.

5. Ansaugvorrichtung nach einem der vorherigen Ansprüche, **dadurch gekennzeichnet, dass** die Wandungen der Saugkanäle (24, 24a) aus Kunststoff bestehen, und die Halbleiterbausteine (14, 27) während des Urformprozesses der Saugkanäle in die Wandungen eingegossen sind.

6. Brennkraftmaschine, **dadurch gekennzeichnet, dass** eine Ansaugvorrichtung gemäß einem der vorherigen Ansprüche zum Einsatz kommt und die Halbleiterbausteine (14, 27) durch Zündendstufen (14) für die Zündkerzen der Brennkraftmaschine gebildet sind.

7. Brennkraftmaschine, **dadurch gekennzeichnet, dass** eine Ansaugvorrichtung gemäß einem der vorherigen Ansprüche zum Einsatz kommt und die Halbleiterbausteine (14, 27) durch Einspritzendstufen (27) für die Einspritzventile der Brennkraftmaschine gebildet sind.

## Claims

1. Intake device for an internal combustion engine, having respectively an intake duct (24, 24a) for each cylinder of the internal combustion engine for supplying air of combustion, an injection valve (21) being incorporated in such a manner into each of the said intake ducts for the fuel to be burned that it is possible to inject the fuel into the intake duct, which fuel is directed, at the same time, onto an evaporation element, **characterised in that** the evaporation element consists of a semiconductor module (14, 27), which is in the form of a switch and has an input (17) for a voltage supply and an output (16) for an electric current collector as well as a connection for control pulses for switching of the same, the semiconductor module being embedded into the walls of the respective intake duct.

2. Intake device according to claim 1, **characterised in that** the respective injection valve is incorporated in such a manner into the wall of the intake duct that the spray direction tends in the direction of the intake air and more especially is at an angle of 15 - 20° relative to said intake air, and **in that** the respective semiconductor module (14, 27) is embedded in the region of the wall situated opposite the injection valve, at the point where the injected fuel contacts this region.

3. Intake device according to one of the previous claims, **characterised in that** the respective semiconductor module (14, 27) protrudes out of the inner walls of the intake duct (24, 24a).

4. Intake device according to one of the previous claims, **characterised in that** the intake device is an intake pipe (13), which combines the intake ducts (24, 24a) in a structure, has a cylinder head flange (26), in which exits (25), formed by the intake ducts, are formed for the connection to the cylinder head flange of an internal combustion engine, and a collecting chamber (23) with an entrance (22) for the air of combustion, from which the intake ducts lead-off.

5. Intake device according to one of the preceding claims, **characterised in that** the walls of the intake ducts (24,2 4a) consist of plastics material, and the semiconductor modules (14, 27) are cast integrally into the walls during the original moulding process of the intake ducts.

6. Internal combustion engine, **characterised in that** an intake device according to one of the preceding claims is used and the semiconductor modules (14, 27) are formed by ignition stages (14) for the sparking plugs of the internal combustion engine.

7. Internal combustion engine, **characterised in that** an intake device according to one of the preceding claims is used and the semiconductor modules (14, 27) are formed by injection end stages (27) for the injection valves of the internal combustion engine.

## Revendications

1. Dispositif d'aspiration pour un moteur à combustion interne qui présente une conduite d'aspiration (24, 24a) respectivement pour chaque cylindre du moteur à combustion interne destiné à conduire de l'air de combustion, une soupape d'injection (21) pour le carburant à brûler étant à chaque fois montée dans lesdites conduites d'aspiration de telle manière qu'il est possible d'injecter dans la conduite d'aspiration le carburant qui est alors dirigé sur un élément de vaporisation,
**caractérisé en ce que**
l'élément de vaporisation se compose d'un composant à semi-conducteur (14, 27) qui est réalisé en tant que commutateur et présente une entrée (17) pour une alimentation en courant et une sortie (16) pour un consommateur électrique ainsi qu'un raccordement pour des impulsions de commande vers son circuit, le composant à semi-conducteur étant inséré dans les parois de la conduite d'aspiration concernée.

2. Dispositif d'aspiration selon la revendication 1,
**caractérisé en ce que**
la soupape d'injection concernée est montée dans la paroi de la conduite d'aspiration de telle manière que la direction de pulvérisation est inclinée en direction de l'air d'aspiration et fait en particulier un angle compris entre 15 et 20° par rapport à elle et le composant à semi-conducteur (14, 27) concerné est inséré dans la zone de paroi située en face de la soupape d'injection à l'endroit où le carburant injecté heurte cette zone.

3. Dispositif d'aspiration selon l'une des revendications précédentes,
**caractérisé en ce que**
le composant à semi-conducteur (14, 27) concerné fait saillie sur les parois intérieures de la conduite d'aspiration (24, 24a).

4. Dispositif d'aspiration selon l'une des revendications précédentes,
**caractérisé en ce que**
le dispositif d'aspiration est une tubulure d'admission (13) qui réunit dans une structure les conduites d'aspiration (24, 24a), qui présente un flasque de tête de cylindre (26) dans lequel des orifices de sortie (25) formés par les conduites d'aspiration sont formés pour le raccord à la tête de cylindre d'un moteur à combustion interne et qui présente un espace collecteur (23) qui comporte un orifice d'entrée (22) pour l'air de combustion et d'où partent les conduites d'aspiration.

5. Dispositif d'aspiration selon l'une des revendications précédentes,
**caractérisé en ce que**
les parois des conduites d'aspiration (24, 24a) sont en matière synthétique et les composants à semi-conducteur (14, 27) sont scellés dans les parois pendant l'opération de formage initiale des conduites d'aspiration.

6. Moteur à combustion interne,
**caractérisé en ce que**
l'on utilise un dispositif d'aspiration selon l'une des revendications précédentes et les composants à serai-conducteur (14, 27) sont formés par des étages d'allumage (14) pour les bougies du moteur à combustion interne.

7. Moteur à combustion interne,
**caractérisé en ce que**
l'on utilise un dispositif d'aspiration selon l'une des revendications précédentes et les composants à semi-conducteur (14, 27) sont formés par des étages d'injection (27) pour les soupapes d'injection du moteur à combustion interne.
